# EUROPÄISCHE PATENTSCHRIFT

(11) **EP 1 459 411 B1**
(45) Veröffentlichungstag und Bekanntmachung des Hinweises auf die Patenterteilung: **11.05.2011**
(21) Anmeldenummer: 03799424.1
(22) Anmeldetag: 02.09.2003
(51) Int. Cl.: H01R 13/506, H01R 13/512, H01R 13/59, H02G 15/04, H01R 13/74

(54) **KABELANSCHLUSS**
CABLE CONNECTION
CONNECTEUR MONTE SUR UN CABLE

(30) Priorität: 13.11.2002 DE 20217501 U
(43) Veröffentlichungstag der Anmeldung: 22.09.2004
(73) Patentinhaber: Anton Hummel Verwaltungs-GmbH, 79183 Waldkirch (DE)
(72) Erfinder: BARTHOLOMÄ, Mario, D-79297 Winden (DE); ZÜGEL, Fritz, D-79183 Waldkirch (DE); GÖTZ, Volker, D-79341 Kenzingen (DE); GERBER, Philipp, D-79261 Gutach (DE)
(74) Vertreter: Maucher, Wolfgang
(86) Internationale Anmeldenummer: PCT/EP2003/009722
(87) Internationale Veröffentlichungsnummer: WO 2004/045028

(56) Entgegenhaltungen:
- DE-A- 19 924 209
- DE-A1- 19 836 631

## Beschreibung

Die Erfindung betrifft einen Kabelanschluss für ein Kabel an einem Gehäuse oder einer Wand, in oder hinter welcher Anschlusskontakte angeordnet sind, mit denen das Kabel in Gebrauchsstellung elektrisch verbunden ist, mit einer an oder in einer Öffnung des Gehäuses oder der Wand befestigbaren oder an- oder einschraubbaren Schraubhülse, in welcher die Anschlusskontakte angeordnet sind, mit einer Aderaufnahme, in welcher in Gebrauchsstellung Adern oder Litzen des anzuschließenden Kabels gehalten sind, die nach dem Einführen der Aderaufnahme in die Schraubhülse in Berührkontakt mit den dort angeordneten Kontakten sind, mit einem das Kabel axial benachbart zu der Aderaufnahme umschließenden und diese in axialer Richtung in der Schraubhülse festlegenden Klemmeinsatz und mit einer Überwurfmutter zum Aufschrauben auf die Schraubhülse bei gleichzeitiger radialer Verformung des Klemmeinsatzes und Festlegungen des Kabels in der endgültigen Gebrauchslage.

Derartige Kabelanschlüsse sind in vielfältiger Form bekannt.

Bei diesen Kabelanschlüssen ist ein Lösen des Kontakts beziehungsweise der Aderaufnahme aus ihrer Gebrauchsstellung solange möglich, bis die Überwurfmutter festgezogen ist. Dies bedeutet bei der Montage eine hohe Sorgfalt und erlaubt praktisch keine Unterbrechung des Montagevorganges beispielsweise für eine Überprüfung, ob die richtigen Adern oder Litzen des Kabels an den richtigen Kontakten anliegen, bevor die Montage nicht beendet ist.

Stellt sich nach fertiger Montage ein Montagefehler heraus, muss die gesamte Anschlussvorrichtung wieder demontiert und korrigiert werden.

Aus DE 198 36 631 C2 ist eine Kabelanschluss- oder Verbindungseinrichtung bekannt, bei der die einzelnen Adern in Gebrauchsstellung an Schneidkontakten gehalten sind und bei der das Aderaufnahmeteil in der Überwurfmutter derart axial fixiert ist, dass die mit dem Auf- bzw. Abschrauben der Überwurfmutter vom Anschlussteil einhergehende axiale Relativbewegung zwischen Überwurfmutter und Anschlussteil auch eine axiale Relativbewegung zwischen Aderaufnahmeteil und Anschlussteil ist. Durch diese axiale Fixierung zwischen Aderaufnahmeteil und Überwurfmutter können diese beiden Teile zwar praktisch in einem Arbeitsgang an das Anschlussteil montiert werden. Eine Montage insbesondere von dickeren und schwereren Kabeln, an einer vertikalen oder gar an einer überhängenden Wand oder Decke von unten ist bei einer solchen Anordnung aufgrund der Schwerkraft schwierig, da beim Ansetzen der Überwurfmutter an ihr Gegengewinde über die Aderaufnahme gleichzeitig das Kabelgewicht gehalten werden muss. Eine Korrektur einer unzutreffenden Kontaktierung ist nur durch vollständige Demontage und Wiederholung des schwierigen Montageverlaufes möglich.

Es besteht deshalb die Aufgabe, einen Kabelanschluss der eingangs genannten Art zu schaffen, bei welchem die Montage auch an vertikalen Wänden oder über Kopf einfach ist und schon vor dem Befestigen der Überwurfmutter mit ausreichender Sicherheit ausprobiert werden kann, ob die richtigen Adern oder Litzen an den zugehörigen Kontakten anliegen.

Zur Lösung dieser Aufgabe ist vorgesehen, dass die Aderaufnahme und die Überwurfmutter getrennt und nacheinander an der Schraubhülse anbringbar sind und dass an oder in der Schraubhülse wenigstens eine Schnappverbindung zum axialen Festlegen der Aderaufnahme in einer Position vorgesehen ist, in welcher die Adern oder Litzen mit den Kontakten in Berührung sind. Durch diese Schnappverbindung ist es möglich, die Aderaufnahme mit den daran schon angeordneten Adern oder Litzen in die Schraubhülse einzuführen und vorab zu fixieren, so dass der Benutzer für das anschließende Anbringen der Überwurfmutter die Aderaufnahme und das daran hängende Kabel nicht mehr selbst halten muss. Zusätzlich kann er dann vor dem Anbringen der Überwurfmutter, das heißt vor der endgültigen Montage ausprobieren, ob die richtigen Litzen mit den zugehörigen Kontakten in Verbindung sind.

Dabei ist es besonders zweckmäßig, wenn eines der beiden axial zusammensteckbaren Teile, nämlich die Schraubhülse oder die Aderaufnahme, einen Vorsprung und das andere dieser beiden axial zusammensteckbaren Teile einen nachgiebigen, hinter dem Vorsprung einschnappenden federnden Abschnitt mit einer einschnappenden Stirnfläche, Nase, Vertiefung, Hinterschneidung oder dergleichen Gegenstück aufweist. Diese Ausführung der Schnappverbindung kann einfach hergestellt werden sowie an verschiedenste Bauformen der Schraubhülse und der Aderaufnahme angewandt werden.

Eine bevorzugte Ausführungsform besteht darin, dass der zu der Schnappverbindung gehörende Vorsprung innenseitig an der Schraubhülse und der federnde, hinter dem Vorsprung einschnappende Teil an der Aderaufnahme angeordnet sind. Dabei kann nahe der Eintrittsöffnung in die Schraubhülse oder innenseitig an deren der Überwurfmutter zugewandtem Rand eine eine Hinterschneidung bildende, radial nach innen ragende Rippe oder dergleichen Vorsprung angeordnet sein, hinter die oder den ein Gegenvorsprung oder die Stirnseite eines in radialer Richtung federnden Abschnitts der Aderaufnahme passt und in Gebrauchsstellung eingreift und einschnappt. Diese Anordnung ist deshalb besonders vorteilhaft, weil der Vorsprung aus dem steifen Werkstoff der Schraubhülse bestehend eine hohe Festigkeit hat und nach innen stehend anformbar ist, während der federnde Abschnitt am Umfang der Aderaufnahme vorzugsweise einstückig anbringbar sein kann.

Der federnde Abschnitt der Aderaufnahme kann vorteilhafterweise durch einen über einen Teil der axialen Länge der Aderaufnahme verlaufenden Schlitz von der Aderaufnahme getrennt und dadurch gleichzeitig gebildet sein, wobei ein geschlossenes Ende des Schlitzes einen federelastischen Verbindungssteg des federnden Abschnitts zu der Aderaufnahme bildet. Diese einstückige Ausbildung des federnden Abschnitts kann langzeitig stabil sein, da der Verbindungssteg beim Ein- und Ausfedern wenig verformt wird und dadurch eine Materialermüdung wenig wirksam werden kann.

Besonders zweckmäßig ist es, wenn die Schnappverbindung zwischen Schraubhülse und Aderaufnahme lösbar ist, um z.B. eine Fehlkontaktierung korrigieren zu können. Dazu ist es vorteilhaft, wenn an der Stirnseite des federnden Abschnitts der Aderaufnahme eine Angriffsstelle zum Verformen des federnden Abschnitts in seine Lösestellung angeordnet ist. Dadurch kann beispielsweise für die Korrektur einer Fehlkontaktierung oder für Wartungen oder Reparaturen oder beim Transport bei mobilen Installationen nach Entfernen der Überwurfmutter die Verbindung zwischen Schraubhülse und Aderaufnahme leicht und schnell getrennt werden, wobei die Adern in der Aderaufnahme verbleiben und zum Wiederherstellen der Verbindung lediglich die Aderaufnahme in die Schraubhülse eingeschnappt und die Überwurfmutter verschraubt werden muss.

Um das Lösen der Schnappverbindung möglichst einfach zu gestalten, ist es zweckmäßig, wenn die Angriffsstelle an dem federnden Abschnitt an ein Werkzeug, beispielsweise an einen Schraubendreher, angepasst und insbesondere als Vertiefung, vorzugsweise als nutenartiger oder kreuzförmiger Schlitz, ausgebildet ist. Dadurch ist kein Spezialwerkzeug nötig. Unter Umständen können in einer solche nutenartige Vertiefung auch andere Hilfsmittel zum Lösen verwendet werden.

Vorteilhaft ist es außerdem, wenn die Funktion der Schnappverbindung mit einer Positionierhilfe, die ein Verdrehen der Adern zu den zugehörigen Kontakten in der Schraubhülse verhindert, kombiniert ist, indem an dem federnden Abschnitt eine mit einem Gegenabschnitt an der Schraubhülse zusammenpassende Positionierhilfe für die richtige Drehposition der Aderaufnahme relativ zu der Schraubhülse vorgesehen ist. Vor allem im Zusammenhang mit der lösbaren Schnappverbindung und dem damit möglichen mehrmaligen Lösen und Wiederherstellen der Verbindung zwischen Aderaufnahme und Schraubhülse kann diese Positionierhilfe eventuelle Fehlverbindungen im praktischen Betrieb vermeiden.

Eine vorteilhafte Ausführung der Positionierhilfe besteht darin, dass die Positionierhilfe an dem federnden Abschnitt eine von einer kreisrunden Querschnittsform abweichende Querschnittsform, beispielsweise eine Abflachung ist, die in axialer Richtung vor dem einschnappenden Gegenvorsprung oder vor der Stirnseite des federnden Abschnitts endet und dass der Verlauf des Vorsprungs oder der Rippe, mit welcher der federnde Abschnitt im Sinne einer Schnappverbindung zusammenwirkt, einen der Querschnittskontur der Oberfläche des federnden Abschnitts entsprechenden Verlauf hat, so dass bei zutreffender Drehlage der federnde Abschnitt an dem Vorsprung oder Rippe quer zu deren Verlauf axial entlang gleitend und die dabei vorgesehene relative Drehlage zwischen Schraubhülse und Aderaufnahme festlegt. Eine so gestaltete Positionierhilfe ist robust und kann langzeitig, auch bei vielmaliger Trennung der Verbindung, die Drehlage zwischen Schraubhülse und Aderaufnahme sichern. Gleichzeitig erleichtert die an der Umfangslage des Vorsprungs an diesen angepasste Abflachung das Einführen der Aderaufnahme und der federnde Abschnitt erhält damit eine Doppelfunktion.

Für eine langzeitige Haltbarkeit der Positionierhilfe ist es ebenso zweckmäßig, wenn der radial innenliegende freie Rand der Rippe zumindest bereichsweise geradlinig und/oder als Sekante an dem Innenquerschnitt der Innenöffnung der Schraubhülse ausgebildet ist. Dies passt zu der Abflachung der Positionierhilfe und ergibt eine wenig vorspringende Rippe, an der auch eine nicht abgeflachte Dichtung eingedrückt werden kann. Außerdem ist die Position der Positionierhilfe an der Schraubhülse gut erkennbar, was das Einführen der Aderaufnahme in die Schraubhülse erleichtern kann.

Zusätzlich zur Positionierhilfe kann es vorteilhaft sein, wenn bei eingeschnappter Position der Aderaufnahme in der Schraubhülse eine relative Verdrehung zwischen Aderaufnahme und Schraubhülse durch eine zusätzliche Drehsicherung verhindert ist. Damit kann auch in eingeschnappter Position, in welcher die Schnapprippe gegenüber der Abflachung der Aderaufnahme außer Wirkung ist, eine Verdrehung der Aderaufnahme relativ zu den Kontakten in der Schraubhülse verhindert werden.

Dabei ist eine besonders zweckmäßige Ausführungsform einer solchen Drehsicherung dadurch gekennzeichnet, dass am Umfang der Aderaufnahme eine Vertiefung oder ein Vorsprung und im Inneren der Schraubhülse ein in die Vertiefung eingreifender Vorsprung oder eine den Vorsprung aufnehmende Vertiefung vorgesehen und in Schnapp-Position in Wirkverbindung miteinander sind.

Zum Schutz der in der Schraubhülse angeordneten Kontakte vor Umwelteinflüssen wie Feuchtigkeit, Staub oder aggressiven Stoffen ist es zweckmäßig, wenn zwischen der äußeren Stirnseite der Aderaufnahme und der Unterseite des Klemmeinsatzes eine in Gebrauchsstellung wenigstens teilweise in das Innere der Schraubhülse eingreifende oder in dem Inneren vollständig versenkte Dichtung vorgesehen ist, die durch die Verschraubung der Überwurfmutter axial an der Aderaufnahme angedrückt ist. Dabei kann diese Dichtung das durch die Überwurfmutter geführte Kabel vorzugsweise vollständig umschließen.

Nachstehend sind Ausführungsbeispiele der Erfindung anhand der Zeichnung näher beschrieben. Es zeigt in zum Teil schematisierter Darstellung:
- Fig.1: eine Explosionsdarstellung eines erfindungsgemäßen Kabelanschlusses,
- Fig.2: eine perspektivische Darstellung einer Schraubhülse mit Positionierhilfe und Drehsicherung,
- Fig.3: eine teilweise geschnittene Darstellung des Kabelanschlusses mit einer Aderaufnahme, die nur wenig in die Schraubhülse eingeführt ist, wobei der Längsschnitt durch den Bereich verläuft, in welchem der den federnden Abschnitt der Aderaufnahme bildende Schlitz angeordnet ist,
- Fig.4: eine teilweise geschnittene Darstellung des Kabelanschlusses mit einer Aderaufnahme, die nur wenig in die Schraubhülse eingeführt ist, mit Andeutung des Einführvorganges,
- Fig.5: eine teilweise geschnittene Darstellung des Kabelanschlusses mit einer Aderaufnahme, die vollständig in die Schraubhülse eingeführt ist,
- Fig.6: eine der Fig.5 entsprechende Darstellung des Kabelanschlusses mit einem an der Schnappverbindung ansetzendes Werkzeug zum Lösen der Schnappverbindung,
- Fig.7: eine zur Hälfte im Längsschnitt gehaltene Ansicht des Kabelanschlusses fertig montiert in Gebrauchsstellung mit einem Kabel mit Adern mit relativ großem Durchmesser sowie
- Fig.8: eine der Fig.7 entsprechende Darstellung des Kabelanschlusses mit einem Kabel mit Adern mit relativ kleinem Durchmesser.

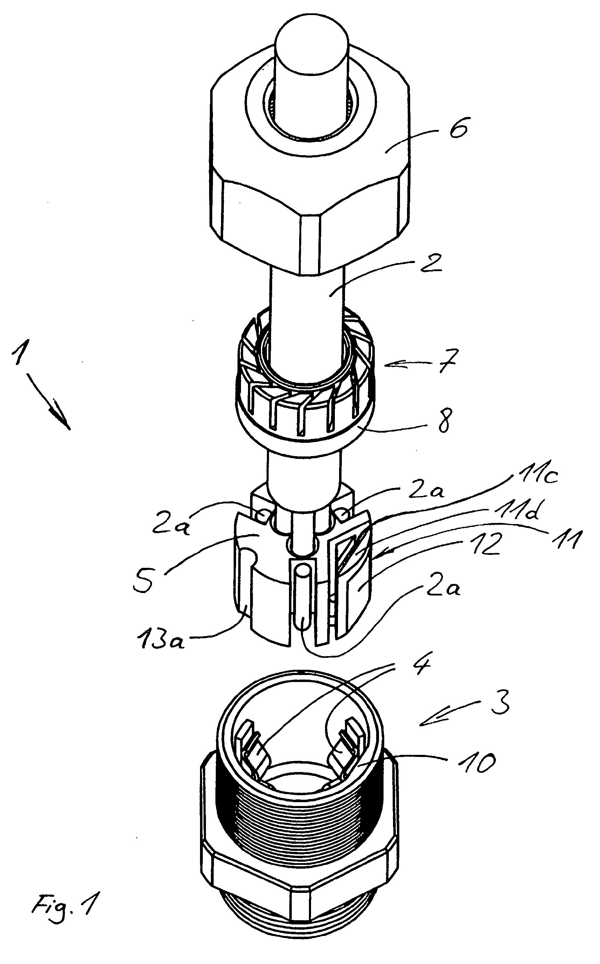

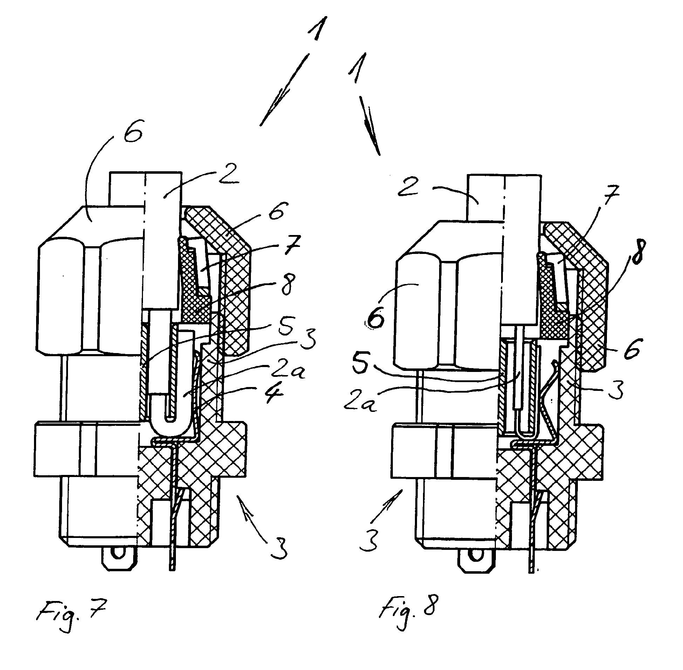

Fig.1 zeigt einen im Ganzen mit 1 bezeichneten Kabelanschluss in Explosionsdarstellung. Der Kabelanschluss 1 für ein Kabel 2 weist eine in ein Gehäuse oder eine Wand befestigbare oder einschraubbare Schraubhülse 3 auf, in welcher Anschlusskontakte 4 angeordnet sind. Außerdem hat der Kabelanschluss 1 eine Aderaufnahme 5 zur Aufnahme und Halterung der einzelnen Adern 2a oder Litzen des Kabels 2, die nach dem Einführen der Aderaufnahme 5 in die Schraubhülse 3 die dort angeordneten Kontakte 4 berühren und damit einen elektrischen Kontakt herstellen. Zu dem Kabelanschluss 1 gehört ferner ein das Kabel 2 axial benachbart zu der Aderaufnahme 5 umschließender und die Aderaufnahme 5 in axialer Richtung beaufschlagender und in der Schraubhülse 3 festlegender Klemmeinsatz 7, der beim Aufschrauben einer Überwurfmutter 6 auf die Schraubhülse 3 von dieser radial verformt wird und das Kabel 2 in der endgültigen Gebrauchslage festlegt (Fig.7 und 8).

Fig.1 zeigt außerdem, dass in der Schraubhülse 3 eine Schnappverbindung zum axialen Festlegen der Aderaufnahme 5 in einer Position vorgesehen ist, in welcher die Adern 2a oder Litzen mit den Kontakten 4 in Berührung stehen. Die Schnappverbindung besteht dabei aus einem Vorsprung 10 an der Schraubhülse 3 sowie aus einem nachgiebigen, in Gebrauchsstellung hinter dem Vorsprung 10 einschnappenden federnden Abschnitt 11.

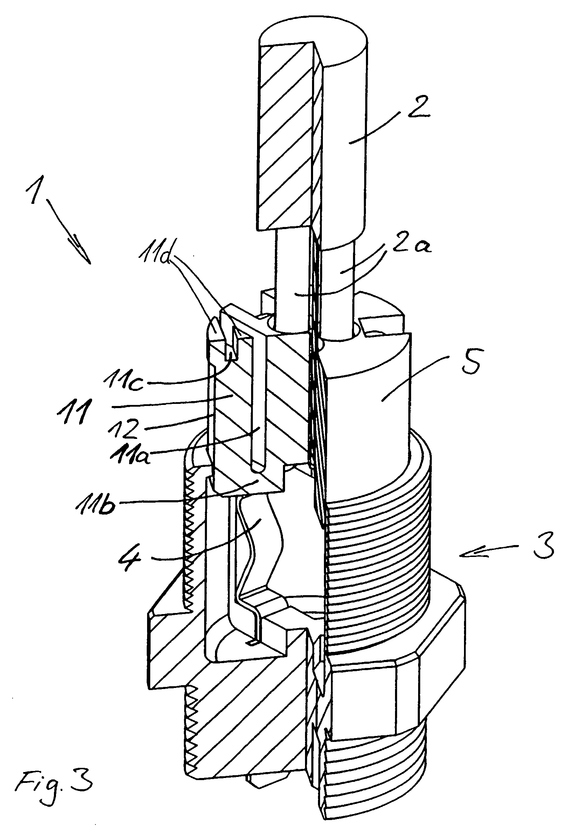

Fig.3 zeigt den eine Hinterscheidung bildende, radial nach innen ragenden Vorsprung 10 und den federnden Abschnitt 11 nochmals im Schnitt, wobei die Aderaufnahme 5 bereits wenig in die Schraubhülse 3 eingeführt, aber noch nicht verrastet ist. Ebenso ist in dieser Schnittdarstellung erkennbar, dass der federnde Abschnitt 11 durch einen über einen Teil der axialen Länge der Aderaufnahme 5 verlaufenden Schlitz 11a von der Aderaufnahme 5 getrennt und gleichzeitig dadurch gebildet ist. Das geschlossene Ende des Schlitzes 11a ist dabei durch einen federelastischen Verbindungssteg 11b zwischen Aderaufnahme 5 und federndem Abschnitt 11 gebildet.

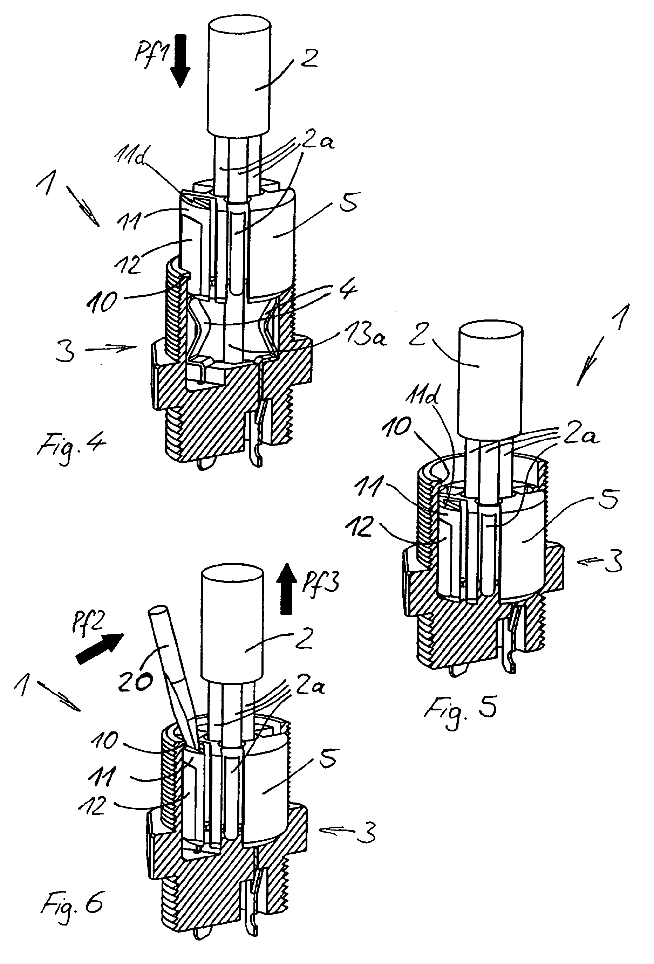

Die Fig.4 zeigt in teilweise geschnittener Darstellung das axiale Einführen der Aderaufnahme 5 in Richtung des Pfeils Pf1 in die Schraubhülse 3. Die Gebrauchsstellung des Kabelanschlusses 1 mit eingeschnappten federnden Abschnitt 11 hinter dem Vorsprung 10 ist in Fig.5 dargestellt sowie die mögliche Lösbarkeit durch Verschwenken der Schnappverbindung in Richtung des Pfeils Pf2 mit Hilfe eines an einer Angriffsstelle 11c an der Stirnseite des federnden Abschnitts 11 angreifenden Werkzeugs 20 zum Verformen des federnden Abschnitts 11 in seine Lösestellung zeigt Fig.6. Diese Angriffsstelle 11c ist dabei als nutenartiger Schlitz ausgebildet, in den ein Schraubendreher oder ein ähnlich gestaltetes Hilfsmittel passt. Nach diesem Verschwenken kann die Aderaufnahme 5 in Richtung des Pfeils Pf3 wieder aus der Schraubhülse 3 herausbewegt werden.

In dem in Fig.3 dargestellten Schnitt durch die Schnappverbindung ist erkennbar, dass der Vorsprung 10 zusammen mit dem federnden Abschnitt 11 gleichzeitig als Positionierhilfe für die Aderaufnahme 5 in der Schraubhülse 3 dienen kann, um die richtige Drehposition bei der Verbindung dieser beiden Teile zu finden. Die Positionierhilfe ist dabei durch eine Abflachung 12, das heißt eine Abweichung von der kreisrunden Querschnittsform der Aderaufnahme 5 an dem federnden Abschnitt 11 gebildet, wobei diese Abflachung 12 an dem Vorsprung 10, der einen der Querschnittskontur der Oberfläche des federnden Abschnitts 11 entsprechenden Verlauf hat und wie die Abflachung 12 geradlinig verläuft und als Sekante an dem Innenquerschnitt der Innenöffnung der Schraubhülse 3 ausgebildet ist, beim Ein führen der Aderaufnahme 5 in die Schraubhülse 3 axial entlang gleitet. Dabei endet die Abflachung 12 in axialer Richtung vor der ihr gegenüber vorspringenden Stirnseite 11d, damit diese hinter dem Vorsprung 10 dennoch einschnappen kann.

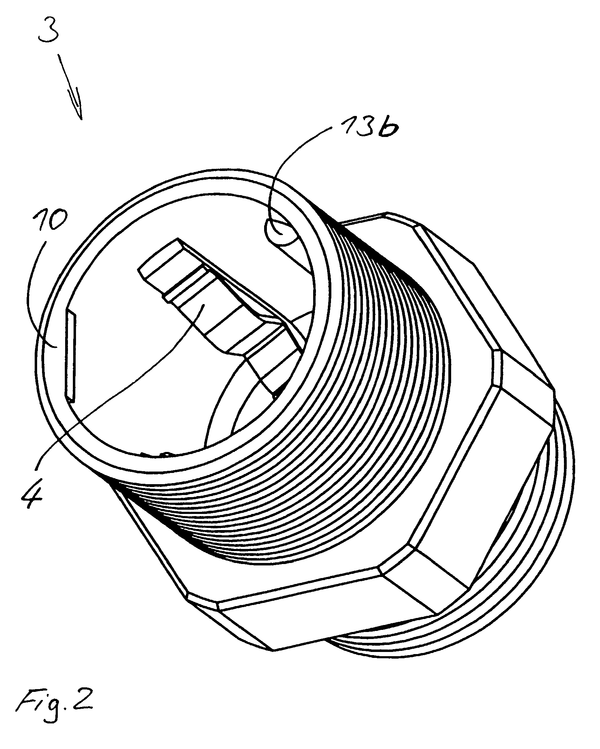

In Fig.1 und Fig.2 ist erkennbar, dass zur Sicherung der eingeschnappten Position der Aderaufnahme 5 in der Schraubhülse 3, das heißt in fertig montierter Gebrauchsstellung, in der der Vorsprung 10 gegenüber der Abflachung 12 an der Aderaufnahme 5 außer Wirkung ist, gegen Verdrehen am Kabelanschluss 1 eine zusätzliche Drehsicherung vorgesehen ist, die durch einen Vorsprung 13b im Inneren der Schraubhülse 3 und durch einen diesen Vorsprung 13b aufnehmende Vertiefung 13a an der Aderaufnahme 5 gebildet ist und wobei der Vorsprung 13b und die Vertiefung 13a in Schnapp-Position in Wirkverbindung miteinander sind. Der Vorsprung 13b verläuft dabei als Steg in axialer Richtung an der Innenseite der Schraubhülse 3, und entsprechend dazu ist die Vertiefung 13a durch eine axial verlaufende Nut am Außenumfang der Aderaufnahme 5 gebildet.

Fig.1 zeigt, dass zwischen der äußeren Stirnseite der Aderaufnahme 5 und der Unterseite des Klemmeinsatzes 7 eine in Gebrauchsstellung ganz oder teilweise in das Innere der Schraubhülse 3 eingreifende Dichtung 8 vorgesehen ist, die durch die Verschraubung der Überwurfmutter 6 axial an der Aderaufnahme 5 angedrückt ist. Die Dichtung 8 umschließt dabei das Kabel 2 am Außenumfang vollständig und kann aufgrund ihrer Elastizität auch an dem Vorsprung 10 eingedrückt werden.

Die Fig.7 und 8 zeigen den Kabelanschluss 1 fertig montiert in Gebrauchsstellung, wobei in Fig.7 ein Kabel 2 montiert ist, welches Adern 2a aufweist, die einen relativ großen Durchmesser im Vergleich zu den Öffnungen in der Aderaufnahme 5 haben. Durch die U-förmige Biegung der Adern 2a am unteren Ende der Aderaufnahme 5 kann in diesem Fall die Aderaufnahme 5 nicht sehr weit in die Schraubhülse 3 reichen, sodass die Dichtung 8 nur teilweise in die Schraubhülse 3 hineinreicht beziehungsweise durch die Überwurfmutter 6 sowie den Klemmeinsatz 7 hineingepresst werden kann.

Das in Fig.8 montierte Kabel 2 mit relativ zu den Öffnungen in der Aderaufnahme 5 dünnen Adern 2a erlaubt eine tiefere Lage der Aderaufnahme 5 in der Schraubhülse 3, wobei dadurch auch die Dichtung 8 durch die Überwurfmutter 6 sowie den Klemmeinsatz 7 fast vollständig in die Schraubhülse 3 gepresst werden kann.

Vor allem bei der Kombination der vorbeschriebenen Merkmale ergibt sich ein einfach zu montierender, gegen Fehlmontagen sicherer und langzeitig haltbarer Kabelanschluss.

## Patentansprüche

1. Kabelanschluss (1) für ein Kabel (2) an einem Gehäuse oder einer Wand, in oder hinter welcher Anschlusskontakte angeordnet sind, mit denen das Kabel (2) in Gebrauchsstellung elektrisch verbunden ist, mit einer an oder in einer Öffnung des Gehäuses oder der Wand befestigbaren oder an- oder einschraubbaren Schraubhülse (3), in welcher die Anschlusskontakte (4) angeordnet sind, mit einer Aderaufnahme (5), in welcher in Gebrauchsstellung Adern (2a) oder Litzen des anzuschließenden Kabels (2) gehalten sind, die nach dem Einführen der Aderaufnahme (5) in die Schraubhülse (3) in Berührkontakt mit den dort angeordneten Kontakten (4) sind, mit einem das Kabel (2) axial benachbart zu der Aderaufnahme (5) umschließenden und diese in axialer Richtung in der Schraubhülse (3) festlegenden Klemmeinsatz (7) und mit einer Überwurfmutter (6) zum Aufschrauben auf die Schraubhülse (3) bei gleichzeitiger radialer Verformung des Klemmeinsatzes (7) und Festlegungen des Kabels (2) in der endgültigen Gebrauchslage, **dadurch gekennzeichnet, dass** die Aderaufnahme (5) und die Überwurfmutter (6) getrennt und nacheinander an der Schraubhülse (3) anbringbar sind und dass an oder in der Schraubhülse (3) wenigstens eine Schnappverbindung zum axialen Festlegen der Aderaufnahme (5) in einer Position vorgesehen ist, in welcher die Adern (2a) oder Litzen mit den Kontakten (4) in Berührung sind.

2. Kabelanschluss nach Anspruch 1, **dadurch gekennzeichnet, dass** eines der beiden axial zusammensteckbaren Teile, nämlich die Schraubhülse (3) oder die Aderaufnahme (5), einen Vorsprung (10) und das andere dieser beiden axial zusammensteckbaren Teile einen nachgiebigen, hinter dem Vorsprung (10) einschnappenden federnden Abschnitt (11) mit einer einschnappenden Stirnfläche (11d), Nase, Vertiefung, Hinterschneidung oder dergleichen Gegenstück aufweist.

3. Kabelanschluss nach Anspruch 1 oder 2, **dadurch gekennzeichnet, dass** der zu der Schnappverbindung gehörende Vorsprung (10) innenseitig an der Schraubhülse (3) und der federnde, hinter dem Vorsprung (10) einschnappende Teil (11) an der Aderaufnahme (5) angeordnet sind.

4. Kabelanschluss nach einem der Ansprüche 1 bis 3, **dadurch gekennzeichnet, dass** nahe der Eintrittsöffnung in die Schraubhülse (3) oder innenseitig an deren der Überwurfmutter (6) zugewandtem Rand eine eine Hinterschneidung bildende, radial nach innen ragende Rippe oder dergleichen Vorsprung (10) angeordnet ist, hinter die oder den den ein Gegenvorsprung oder die Stirnseite eines in radialer Richtung federnden Abschnitts (11) der Aderaufnahme (5) passt und in Gebrauchsstellung eingreift und einschnappt.

5. Kabelanschluss nach einem der Ansprüche 1 bis 4, **dadurch gekennzeichnet, dass** der federnde Abschnitt (11) der Aderaufnahme (5) durch einen über einen Teil der axialen Länge der Aderaufnahme (5) verlaufenden Schlitz (11a) von der Aderaufnahme (5) getrennt und **dadurch** gleichzeitig gebildet ist, wobei ein geschlossenes Ende des Schlitzes (11a) einen federelastischen Verbindungssteg (11b) des federnden Abschnitts (11) zu der Aderaufnahme (5) bildet.

6. Kabelanschluss nach einem der Ansprüche 1 bis 5, **dadurch gekennzeichnet, dass** die Schnappverbindung zwischen Schraubhülse (3) und Aderaufnahme (5) lösbar ist.

7. Kabelanschluss nach einem der Ansprüche 1 bis 6, **dadurch gekennzeichnet, dass** an der Stirnseite (11d) des federnden Abschnitts (11) der Aderaufnahme (5) eine Angriffsstelle (11c) zum Verformen des federnden Abschnitts (11) in seine Lösestellung angeordnet ist.

8. Kabelanschluss nach einem der Ansprüche 1 bis 7, **dadurch gekennzeichnet, dass** die Angriffsstelle (11c) an dem federnden Abschnitt (11) an ein Werkzeug (20), beispielsweise an einen Schraubendreher, angepasst und insbesondere als Vertiefung, vorzugsweise als nutenartiger oder kreuzförmiger Schlitz, ausgebildet ist.

9. Kabelanschluss nach einem der Ansprüche 1 bis 8, **dadurch gekennzeichnet, dass** an dem federnden Abschnitt (11) eine mit einem Gegenabschnitt an der Schraubhülse (3) zusammenpassende Positionierhilfe für die richtige Drehposition der Aderaufnahme (5) relativ zu der Schraubhülse (3) vorgesehen ist.

10. Kabelanschluss nach einem der Ansprüche 1 bis 9, **dadurch gekennzeichnet, dass** die Positionierhilfe an dem federnden Abschnitt (11) eine von einer kreisrunden Querschnittsform abweichende Querschnittsform, beispielsweise eine Abflachung (12) ist, die in axialer Richtung vor dem einschnappenden Gegenvorsprung oder vor der Stirnseite (11d) des federnden Abschnitts (11) endet und dass der Verlauf des Vorsprungs (10) oder der Rippe, mit welcher der federnde Abschnitt (11) im Sinne einer Schnappverbindung zusammenwirkt, einen der Querschnittskontur der Oberfläche des federnden Abschnitts (11) entsprechenden Verlauf hat, so dass bei zutreffender Drehlage der federnde Abschnitt (11) an dem Vorsprung (10) oder Rippe quer zu deren Verlauf axial entlang gleitend und die dabei vorgesehene relative Drehlage zwischen Schraubhülse (3) und Aderaufnahme (5) festlegt.

11. Kabelanschluss nach einem der Ansprüche 1 bis 10, **dadurch gekennzeichnet, dass** der radial innenliegende freie Rand (10a) der Rippe (10) zumindest bereichsweise geradlinig und/oder als Sekante an dem Innenquerschnitt der Innenöffnung der Schraubhülse (3) ausgebildet ist.

12. Kabelanschluss nach einem der Ansprüche 1 bis 11, **dadurch gekennzeichnet, dass** bei eingeschnappter Position der Aderaufnahme (5) in der Schraubhülse (3) eine relative Verdrehung zwischen Aderaufnahme (5) und Schraubhülse (3) durch eine zusätzliche Drehsicherung verhindert ist.

13. Kabelanschluss nach Anspruch 12, **dadurch gekennzeichnet, dass** am Umfang der Aderaufnahme (5) eine Vertiefung (13a) oder ein Vorsprung und im Inneren der Schraubhülse ein in die Vertiefung eingreifender Vorsprung (13b) oder eine den Vorsprung aufnehmende Vertiefung (13a) vorgesehen und in Schnapp-Position in Wirkverbindung miteinander sind.

14. Kabelanschluss nach einem der vorstehenden Ansprüche, **dadurch gekennzeichnet, dass** zwischen der äußeren Stirnseite der Aderaufnahme (5) und der Unterseite des Klemmeinsatzes (7) eine in Gebrauchsstellung wenigstens teilweise in das Innere der Schraubhülse (3) eingreifende oder in dem Inneren vollständig versenkte Dichtung (8) vorgesehen ist, die durch die Verschraubung der Überwurfmutter (6) axial an der Aderaufnahme (5) angedrückt ist.

## Claims

1. Cable connector (1) for a cable (2) on a housing or a wall, in or behind which there are connecting contacts to which the cable (2) is electrically connected in the position of use, having a threaded sleeve (3) in which the connecting contacts (4) are arranged, which can be attached to or screwed onto or into an opening in the housing or the wall, having a core holder (5) in which, in the position of use, cores (2a) or stranded conductors of the cable (2) that is to be connected are held, which after the core holder (5) has been inserted in the threaded sleeve (3) are in touching contact with the contacts (4) arranged therein, having a clamping insert (7) that surrounds the cable (2) axially adjacent to the core holder (5) and secures it in the axial direction in the threaded sleeve (3), and with a check nut (6) for screwing onto the threaded sleeve (3) while at the same time radially deforming the clamping insert (7) and securing the cable (2) in the final position of use, **characterised in that** the core holder (5) and the check nut (6) can be mounted on the threaded sleeve (3) separately and one after the other and that at least one snap-fit connection for axially securing the core holder (5) in a position in which the cores (2a) or stranded conductors are in contact with the contacts (4) is provided on or in the threaded sleeve (3).

2. Cable connector according to claim 1, **characterised in that** at least one of the two axially connectable parts, namely the threaded sleeve (3) or the core holder (5), comprises a projection (10) and the other of these two axially connectable parts comprises a flexible, resilient portion (11) with a snap-in end face (11d), lug, depression, undercut or similar mating part that snaps in behind the projection (10).

3. Cable connector according to claim 1 or 2, **characterised in that** the projection (10) belonging to the snap-fit connection is mounted on the inside of the threaded sleeve (3) and the resilient portion (11) that snaps in behind the projection (10) is mounted on the core,holder (5).

4. Cable connector according to one of claims 1 to 3, **characterised in that** close to the entry opening into the threaded sleeve (3) or on the inside thereof on its edge facing the check nut (6) is provided a rib or similar projection (10) forming an undercut and projecting radially inwards, behind which a mating projection or the end face of a radially resilient portion (11) of the core holder (5) fits and engages and snaps into place in the position of use.

5. Cable connector according to one of claims 1 to 4, **characterised in that** the resilient portion (11) of the core holder (5) is separated from the core holder (5) by a slot (11a) extending over part of the axial length of the core holder (5) and at the same time is formed thereby, a closed end of the slot (11a) forming a resiliently elastic connecting strip (11b) connecting the resilient portion (11) to the core holder (5).

6. Cable connector according to one of claims 1 to 5, **characterised in that** the snap-fit connection between the threaded sleeve (3) and the core holder (5) is releasable.

7. Cable connector according to one of claims 1 to 6, **characterised in that** a point of engagement (11c) for deforming the resilient portion (11) into its release position is provided on the end face (11d) of the resilient portion (11) of the core holder (5).

8. Cable connector according to one of claims 1 to 7, **characterised in that** the point of engagement (11c) on the resilient portion (11) is adapted to fit a tool (20), for example a screwdriver, and is more particularly in the form of a depression, preferably a groove-like or cross-shaped slot.

9. Cable connector according to one of claims 1 to 8, **characterised in that** on the resilient portion (11) is provided a positioning ald which fits a mating portion on the threaded sleeve (3), for achieving the correct rotational position of the core holder (5) relative to the threaded sleeve (3).

10. Cable connector according to one of claims 1 to 9, **characterised in that** the positioning aid on the resilient portion (11) is a cross-sectional shape other than a circular cross-sectional shape, for example a flattened portion (12), which terminates before the snap-in mating projection or before the end face (11d) of the resilient portion (11) in the axial direction, and **in that** the configuration of the projection (10) or of the rib with which the resilient portion (11) cooperates to form a snap-in connection has a shape that corresponds to the cross-sectional contour of the surface of the resilient portion (11), so that in the correction rotational position the resilient portion (11) slides axially along the projection (10) or rib transversely with respect to their extent and fixes the relative rotational position thus established between the threaded sleeve (3) and the core holder (5).

11. Cable connector according to one of claims 1 to 10, **characterised in that** the radially inner free edge (10a) of the rib (10) is configured at least partially as a straight line and/or as a secant on the internal cross-section of the internal opening of the threaded sleeve (3).

12. Cable connector according to one of claims 1 to 11, **characterised in that** when the core holder (5) is snapped into position in the threaded sleeve (3) relative rotation between the core holder (5) and the threaded sleeve (3) is prevented by an additional rotation preventing means.

13. Cable connector according to claim 12, **characterised in that** on the circumference of the core holder (5) is provided a recess (13a) or a projection and inside the threaded sleeve is provided a projection (13b) that engages in the recess or a recess (13a) that accommodates the projection and in the snapped-in position these are operatively connected to one another.

14. Cable connector according to one of the preceding claims, **characterised in that** between the external end face of the core holder (5) and the underside of the clamping insert (7) is provided a seal (8) that, in the position of use, at least partially engages in the interior of the threaded sleeve (3) or is fully countersunk into the interior, said seal being axially pressed against the core holder (5) by the tightening of the check nut (6).

## Revendications

1. Connecteur (1) de raccordement d'un câble (2) à un boîtier ou à une paroi dans, ou derrière laquelle sont disposés des contacts de raccordement auxquels ledit câble (2) est relié électriquement en position d'utilisation, comprenant une douille filetée (3) qui peut être fixée, voire vissée sur ou dans un orifice dudit boîtier ou de ladite paroi, et dans laquelle lesdits contacts de raccordement (4) sont placés ; un logement (5) dans lequel, en position d'utilisation, sont retenus des brins (2a) ou des cordons du câble (2) à raccorder qui, après que ledit logement (5) des brins a été inséré dans ladite douille filetée (3), touchent les contacts (4) placés dans cette dernière ; une pièce intégrée de coincement (7) qui ceinture axialement ledit câble (2), au voisinage dudit logement (5) des brins, et bloque celui-ci axialement à demeure dans ladite douille filetée (3) ; et un capuchon taraudé (6) conçu pour être vissé sur ladite douille filetée (3) en impliquant, dans le même temps, une déformation radiale de ladite pièce intégrée de coincement (7) et des blocages à demeure dudit câble (2) dans la position définitive d'utilisation, **caractérisé par le fait que** le logement (5) des brins et le capuchon taraudé (6) peuvent être rapportés sur la douille filetée (3) de manière séparée, et l'un après l'autre ; et **par le fait qu'**il est prévu, sur ou dans ladite douille filetée (3), au moins une liaison par crantage dévolue au blocage axial à demeure dudit logement (5) des brins en un emplacement auquel lesdits brins (2a), ou cordons, touchent les contacts (4).

2. Connecteur (1) de câble, selon la revendication 1, **caractérisé par le fait que** l'une des deux pièces pouvant être assemblées par emboîtement axial, c'est-à-dire la douille filetée (3) ou le logement (5) des brins, est munie d'une saillie (10) ; et l'autre, parmi ces deux pièces pouvant être assemblées par emboîtement axial, est pourvue d'une région (11) douée de souplesse élastique qui vient s'encliqueter élastiquement derrière ladite saillie (10) et présente une face extrême (11d), un bec, un renfoncement, une contre-dépouille ou un élément complémentaire analogue venant s'encliqueter.

3. Connecteur (1) de câble, selon la revendication 1 ou 2, **caractérisé par le fait que** la saillie (10), faisant partie de la liaison par crantage, est disposée à la face intérieure de la douille filetée (3) ; et la pièce élastique (11), venant s'encliqueter derrière ladite saillie (10), est disposée sur le logement (5) des brins.

4. Connecteur (1) de câble, selon l'une des revendications 1 à 3, **caractérisé par** la présence, à proximité de l'orifice de pénétration dans la douille filetée (3) ou à la face intérieure de cette dernière, sur son bord tourné vers le capuchon taraudé (6), d'une nervure ou saillie similaire (10) qui dépasse radialement vers l'intérieur, forme une contre-dépouille, et derrière laquelle une saillie complémentaire ou la face extrême d'une région (11) du logement (5) des brins, douée d'élasticité dans le sens radial, s'adapte et pénètre par déclic en position d'utilisation.

5. Connecteur (1) de câble, selon l'une des revendications 1 à 4, **caractérisé par le fait que** la région élastique (11) du logement (5) des brins est séparée dudit logement (5) des brins par une fente (11a), s'étendant sur une partie de la longueur axiale dudit logement (5) des brins, et s'en trouve ainsi concomitamment formée, sachant qu'une extrémité fermée de ladite fente (11a) matérialise une membrure élastique (11b) de liaison de ladite région élastique (11) avec ledit logement (5) des brins.

6. Connecteur (1) de câble, selon l'une des revendications 1 à 5, **caractérisé par le fait que** la liaison par crantage, instaurée entre la douille filetée (3) et le logement (5) des brins, est de type libérable.

7. Connecteur (1) de câble, selon l'une des revendications 1 à 6, **caractérisé par** la présence, à la face extrême (11d) de la région élastique (11) du logement (5) des brins, d'une zone d'engagement (11c) dévolue à la déformation de ladite région élastique (11) vers sa position de dissociation.

8. Connecteur (1) de câble, selon l'une des revendications 1 à 7, **caractérisé par le fait que** la zone d'engagement (11c) ménagée sur la région élastique (11) est adaptée à un outil (20), par exemple à un tournevis, et est notamment réalisée sous la forme d'une creusure, de préférence d'une fente du type rainure ou de configuration cruciforme.

9. Connecteur (1) de câble, selon l'une des revendications 1 à 8, **caractérisé par le fait qu'**un auxiliaire de positionnement s'adaptant à une région complémentaire située sur la douille filetée (3), et assigné à l'emplacement correct que le logement (5) des brins prend par rotation, vis-à-vis de ladite douille filetée (3), est prévu sur la région élastique (11).

10. Connecteur (1) de câble, selon l'une des revendications 1 à 9, **caractérisé par le fait que** l'auxiliaire de positionnement, situé sur la région élastique (11), se présente comme une configuration de section transversale s'écartant de la configuration de section transversale circulaire, par exemple comme un méplat (12) qui s'achève, dans le sens axial, avant la saillie complémentaire à pénétration par déclic ou avant la face extrême (11d) de ladite région élastique (11) ; et **par le fait que** le profil de la saillie (10) ou de la nervure, avec laquelle la région élastique (11) coopère dans le sens d'une liaison par crantage, offre un tracé correspondant au profil de section transversale de la surface de ladite région élastique (11), de façon telle qu'en présence d'une position adéquate prise par rotation, ladite région élastique (11) glisse axialement le long de ladite saillie (10) ou nervure, transversalement par rapport au tracé de cette dernière, et consigne alors fermement la position prévue, résultant d'une rotation relative de la douille filetée (3) et du logement (5) des brins.

11. Connecteur (1) de câble, selon l'une des revendications 1 à 10, **caractérisé par le fait que** le bord libre radialement intérieur (10a) de la nervure (10) présente une réalisation rectiligne, au moins par zones, et/ou revêt la forme d'une sécante à la section transversale intérieure de l'orifice intérieur de la douille filetée (3).

12. Connecteur (1) de câble, selon l'une des revendications 1 à 11, **caractérisé par le fait que**, lorsque le logement (5) des brins occupe un emplacement encliqueté dans la douille filetée (3), une rotation relative, entre ledit logement (5) des brins et ladite douille filetée (3), est empêchée par un arrêt antirotation supplémentaire.

13. Connecteur (1) de câble, selon la revendication 12, **caractérisé par le fait qu'**un renfoncement (13a) ou une saillie est prévu(e) sur le pourtour du logement (5) des brins ; et une saillie (13b) pénétrant dans ledit renfoncement, ou un renfoncement (13a) recevant ladite saillie, est prévu(e) dans l'espace interne de la douille filetée, avec liaison mutuelle opérante à l'emplacement encliqueté.

14. Connecteur (1) de câble, selon l'une des revendications précédentes, **caractérisé par le fait qu'**une garniture d'étanchement (8) prévue entre la face extrême extérieure du logement (5) des brins et la face inférieure de la pièce intégrée de coincement (7), et pénétrant au moins partiellement dans l'espace interne de la douille filetée (3), voire intégralement encaissée dans ledit espace interne en position d'utilisation, est pressée axialement contre ledit logement (5) des brins sous l'effet du vissage du capuchon taraudé (6).
